# EUROPEAN PATENT SPECIFICATION

(11) **EP 3 095 972 B1**
(45) Date of publication and mention of the grant of the patent: **17.10.2018**
(21) Application number: 16169782.6
(22) Date of filing: 16.05.2016
(51) Int. Cl.: F01D 25/30, B01D 53/94, F02C 3/30

(54) **SYSTEM FOR ARRANGING AN EMISSION REDUCING CATALYST IN AN EXHAUST DUCT OF A GAS TURBINE ENGINE**
SYSTEM ZUM ANORDNEN EINES EMISSIONSREDUZIERENDEN KATALYSATORS IN EINEM ABGASKANAL EINER GASTURBINE
SYSTÈME DE DISPOSITION D'UN CATALYSEUR DE RÉDUCTION D'ÉMISSION DANS UN CONDUIT D'ÉCHAPPEMENT D'UN MOTEUR À TURBINE À GAZ

(30) Priority: 21.05.2015 US 201514718253
(43) Date of publication of application: 23.11.2016
(73) Proprietor: General Electric Company, Schenectady, NY 12345 (US)
(72) Inventor: ZHANG, Hua, Greenville, 29615 (US); TRAYHAN, David, Greenville, SC South Carolina 29615 (US)
(74) Representative: Lee, Brenda

(56) References cited:
- EP-A2- 1 767 747
- US-A- 4 131 432
- US-A- 5 555 718
- US-B1- 6 737 032

## Description

### BACKGROUND OF INVENTION

The invention relates to a gas turbine power plant comprising an exhaust system including a transition duct, a flue gas exhaust duct, an exhaust stack outlet, and a catalyst, wherein the catalyst is arranged such that the exhaust flow encounters the catalyst in the exhaust duct.

Catalysts have been inserted in exhaust ducts to remove pollutants from the exhaust of a gas turbine engine. These catalyst walls span the exhaust duct and are perpendicular to the flow of the exhaust gas through the duct. The walls cause the exhaust gas to rapidly increase in speed as the gas flows through apertures, channels, or honey comb holes in the wall. The rapid acceleration results in a large loss of pressure of up to 15 inches of water (H₂O).

The large pressure loss is not desired. To minimize the pressure drop, the flow passages of exhaust ducts have been given greater cross-sectional areas in the flow direction through the ducts. Increasing the cross section of an exhaust duct increases the cost and footprint of the ducts From documents EP1767747 and US4131432 exhaust ducts with inclined catalytic surfaces are known.

### BRIEF DESCRIPTION OF INVENTION

The invention pertains to an exhaust section for a gas turbine as laid out in claim 1. A novel orientation for a catalyst supported platform has been conceived in which the face of the platform is slanted in the exhaust duct. Angling the catalyst support platform, e.g., wall, increases exposed surface area of the platform and thereby permits an increase in the number of apertures through which flows the exhaust gas. The greater the number of apertures, the lower the pressure drop through the catalyst supported platform.

An exhaust section for a gas turbine power plant including: an exhaust duct in fluid communication with exhaust gas from a gas turbine engine, wherein the exhaust gas flows through the exhaust duct along a flow direction; a catalyst supporting platform spanning a flow passage in the exhaust duct such that the exhaust gas passes through the platform, wherein the platform includes apertures having catalyst coated surfaces and the catalyst supporting platform includes portions arranged at an angle greater than ten (10) degrees with respect to the flow direction.

The catalyst supporting platform may be substantially a conical shape with a cone axis parallel to the flow direction, wherein the conical shape has a V-cross section which converges in the flow direction. The apertures may have axes oriented in a range of ten to ninety degrees with respect to the flow direction. The cone axis may also be other than parallel to the flow direction.

Further, the catalyst supporting platform may be oriented in a plane at an angle with respect to the flow direction in a range of ten to ninety degrees. The catalyst support platform includes steps where each step includes a riser in a plane substantially perpendicular to the flow direction and a tread in a plane substantially parallel to the flow direction.

An exhaust section for a gas turbine power plant comprising: a transition duct; an exhaust duct; an exhaust exit stack; a porous catalyst supporting platform within the exhaust duct or exhaust exit stack, wherein the catalyst supporting platform extends across an exhaust air flow passage such that the exhaust air from a gas turbine engine flows through platform; and the catalyst supporting platform is arranged such that the exhaust air flow encounters the catalyst at an angle to the direction of the exhaust air flow in a range of ten to ninety degrees.

### BRIEF DESCRIPTION OF THE DRAWINGS

FIG. 1a is an illustration of an exemplary conventional exhaust system; FIG. 1b is an alternative view of a gas turbine system according to FIG. 1a;
FIG. 2a is an illustration of a first embodiment of an exhaust system according to the invention; FIG. 2b is an alternative view of a gas turbine system according to FIG. 2a;
FIG. 3a is an illustration of a second embodiment of an exhaust system according to the invention; FIG. 3b is an alternative view of a gas turbine system according to FIG. 3a;
FIG. 4a is an illustration of a third embodiment of an exhaust system according to the invention; FIG. 4b is an alternative view of a gas turbine system according to FIG. 4a;
FIG. 5a is an illustration of a fourth embodiment of an exhaust system according to the invention; FIG. 5b is an alternative view of a gas turbine system according to FIG. 5a;
FIG. 6a is an illustration of a fifth embodiment of an exhaust system according to the invention; FIG. 6b is an alternative view of a gas turbine system according to FIG. 6a;
FIG. 7a is an illustration of a sixth embodiment of an exhaust system according to the invention; FIG. 7b is an alternative view of a gas turbine system according to FIG. 7a;
FIG. 8a is an illustration of a seventh embodiment of an exhaust system according to the invention; FIG. 8b is an alternative view of a gas turbine system according to FIG. 8a;
FIG. 9a is an illustration of an eighth embodiment of an exhaust system according to the invention; FIG. 9b is an alternative view of a gas turbine system according to FIG. 9a; and
FIG. 10 is an illustration of a ninth embodiment of an exhaust system according to the invention.

### DETAILED DESCRIPTION OF THE INVENTION

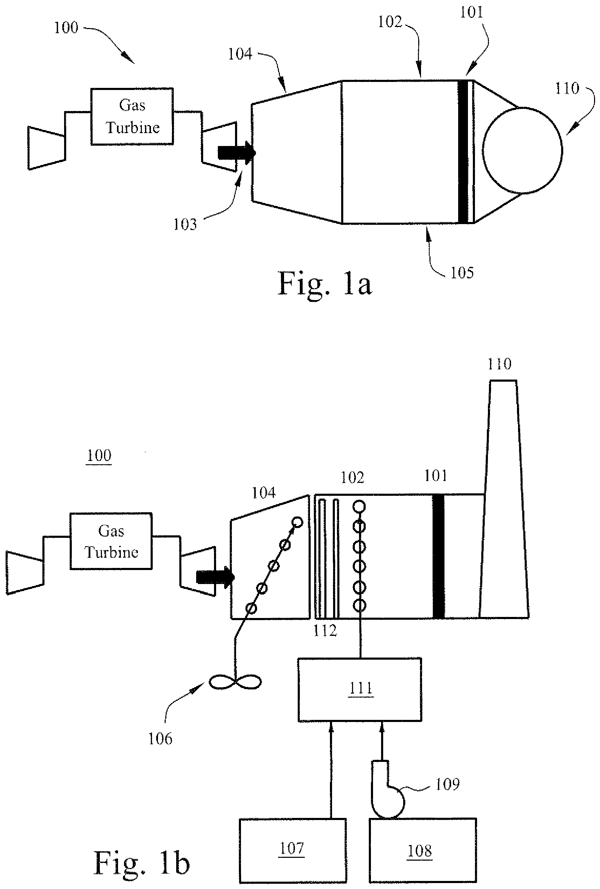

FIG. 1a is an illustration of a conventional gas turbine system 100 featuring a catalyst contained in a platform 101 within its exhaust duct 102 oriented normal to the flow 103 of exhaust gases. As FIG. 1a illustrates, air exiting the turbine system 100, which will be at a high temperature and a high velocity, enters the exhaust duct 102 via a transition stage 104 where the exhaust may be mixed with cooling air supplied by fans 106, and/or it may have a mix of NH₃ and hot flue gases 108 introduced by a blower 109, the NH₃ 107 and hot flue gases 108 optionally passing through an evaporator/mixer 111. The exhaust gas, which may include the NH₃ 107 and hot flue gases, then is forced to pass through a catalyst 101. The catalyst may be for removing NOₓ as required by environmental laws. As is illustrated, the catalyst conventionally is arranged as a wall which is normal (perpendicular) to the flow 103 of gases through the exhaust duct 102. In the conventional design illustrated herein, the flow 103 of exhaust gas is forced to abruptly speed up and go through the catalyst wall, resulting in an unfavorable substantial drop in pressure and resulting loss in efficiency of the gas turbine. Flow 103 may optionally pass through additional catalysts such as CO catalyst 112. FIGS. 1a and 1b illustrate alternative views of gas turbine system 100.

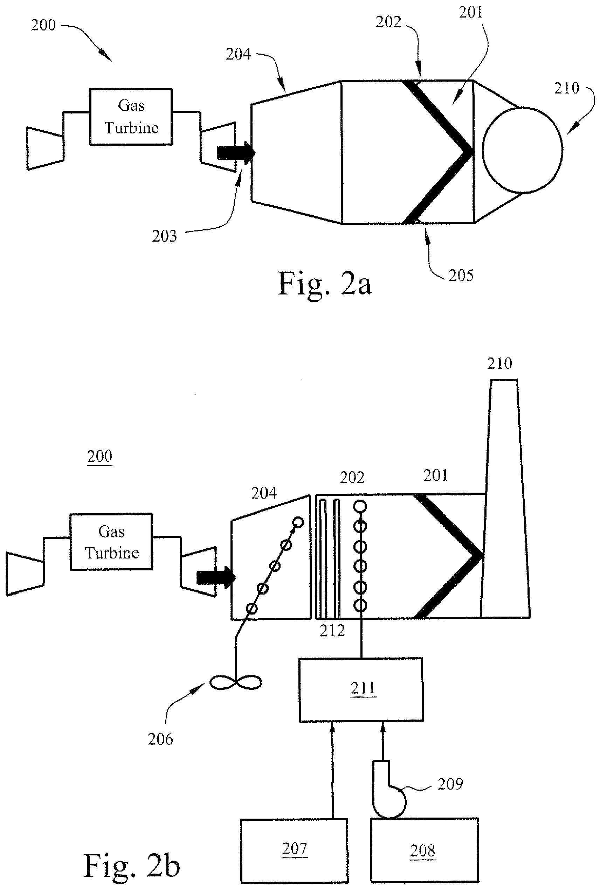

FIG. 2a is an illustration of a first embodiment of a gas turbine system 200 featuring an exhaust system according to the invention. In the first embodiment, the wall-like catalyst structure of FIG. 1a has been replaced instead with a substantially V-shaped catalyst 201. The V-shaped catalyst 201 may be oriented such that the tip of the V is pointed in the direction of the flow 203 of the exhaust gas. The V-shaped catalyst 201 may be arranges such that the arms of the V-shaped catalyst originate at substantially the same location or a different location on the exhaust duct as the conventional catalyst, with the V shape projecting outwardly therefrom. The V-shape may be substantially wedge-like, comprising two structures which may be identical or of different lengths.

In this novel system, the improved catalyst gives the exhaust air additional cross sectional area to go through as compared with the conventional design. The catalyst 201 itself may be a honeycomb design comprising an array of holes, which may be for removal of pollutants and especially NOₓ. The exhaust flow 203, as it reaches the novel catalyst arrangement, will encounter the catalyst 201 at angles other than ninety degrees, which will mitigate the energy loss and thus also mitigate the pressure loss to the system. The cooling flow 206 may mix with flue gas 203 and reduce the temperature of 203, as the catalyst 201 may have improved function at the reduced temperature. The mixed flue gas 203 and cooling air 206 flow through catalyst 201 with angle relative the flow direction. This process gives the system more residence time and cross section area to allow catalytic reactions of ammonia and NOx. In contrast, in a conventional system, the smaller cross sectional area and lower/diminished residence time would result in a large drop in pressure and correspondingly a large drop in efficiency of the gas turbine. FIGS. 2a and 2b illustrate views of gas turbine system 200. Flow 203 may optionally pass through additional catalysts such as CO catalyst 212, which may be of conventional design arranged according to any of the nonlimiting embodiments described herein.

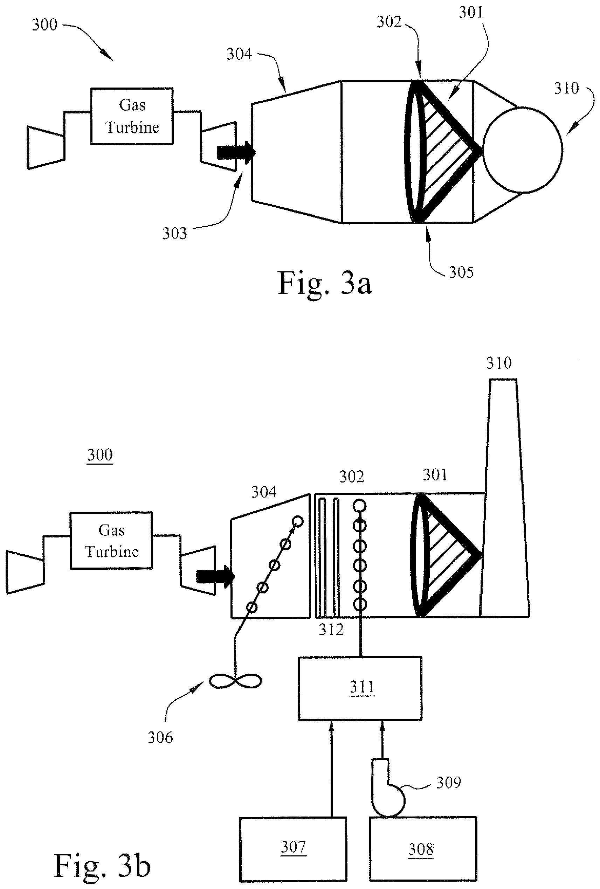

FIG. 3a is an illustration of a second embodiment according to the invention. In this embodiment, the V-shape of FIG. 2a is replaced with a cone-shape catalyst 301 oriented to point in the direction of the flow 303 of the exhaust gases. Instead of the substantially flat sections comprising the V-shape of the embodiment of FIG. 2a, FIG. 3a illustrates a cone shape located within the exhaust duct 302 performing the same function as the V-shaped catalyst of FIG. 2a. The cone originates around the edges of the exhaust duct and narrows in the direction of the flow 303 of exhaust gas. In an alternative embodiment, the catalyst may be configured as a hollow pyramidal structure. The shape of the perimeter of the catalyst structure will be determined by the shape of the corresponding exhaust duct 302. The cone may be oriented such that its central axis aligns with the flow 303 of exhaust gas. The cone may alternatively be oriented such that the cone has a central axis oriented at an angle greater than zero relative to the flow direction of the exhaust gas. The circular (or rectangular) edge defining one end of the cone may be arranged concentrically within the section in which the cone is located, or may be offset or angled relative to the exhaust section and the flow of gases passing therethrough. FIGS. 3a and 3b illustrate views of gas turbine system 300. Flow 303 may optionally pass through additional catalysts such as CO catalyst 312, which may be of conventional design arranged according to any of the nonlimiting embodiments described herein.

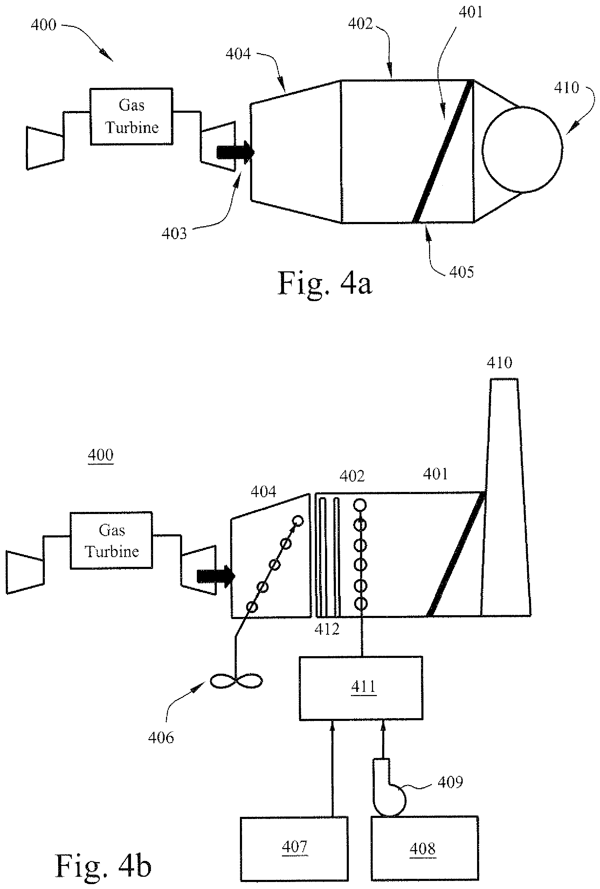

FIG. 4a is an illustration of a third embodiment according to the invention. In this embodiment the conventional flat wall oriented perpendicularly to the flow of exhaust gases has been replaced with an angled catalyst wall 401. The catalyst will be anchored to the exhaust duct and extend backwards towards the exhaust stack, where its more downstream end will also be configured to substantially contact the exhaust duct and require exhaust gases to pass through the catalyst structure 401 before exiting the system. The angled wall embodiment may be arranged within an exit stack instead or in addition to being within the exhaust duct 402. FIGS. 4a and 4b illustrate views of gas turbine system 400. Flow 403 may optionally pass through additional catalysts such as CO catalyst 412, which may be of conventional design arranged according to any of the nonlimiting embodiments described herein.

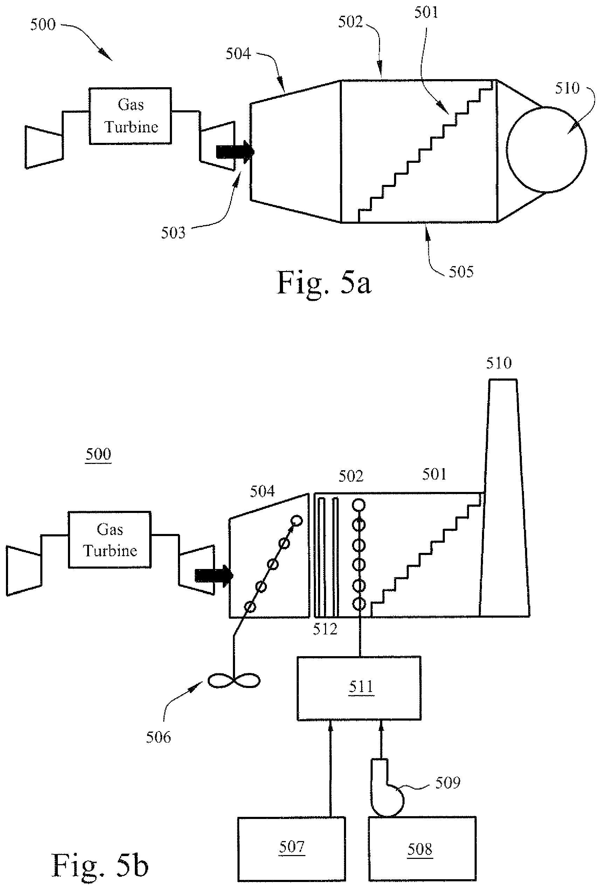

FIG. 5a is an illustration of a fourth embodiment according to the invention. In this embodiment, the angled catalyst has been modified to be structured as a substantially stair step configuration 501. Such an embodiment can be oriented such that the stair step consists of segments which are normal to the flow 503 of exhaust gas and other segments which are parallel to the flow 503 of exhaust gas. In another configuration, the stair step catalyst 501 consists of segments which are neither perpendicular nor parallel to the direction of flow 503 of the exhaust gases. The segments may all be of the same length or the segments may vary in length. The segments may all be oriented with the same pair of angles relative to each other or the segments may be oriented using a range of angles. The angles chosen specifically will be dependent on the particular exhaust duct 502 structure utilized. FIGS. 5a and 5b illustrate views of gas turbine system 500. Flow 503 may optionally pass through additional catalysts such as CO catalyst 512, which may be of conventional design arranged according to any of the nonlimiting embodiments described herein.

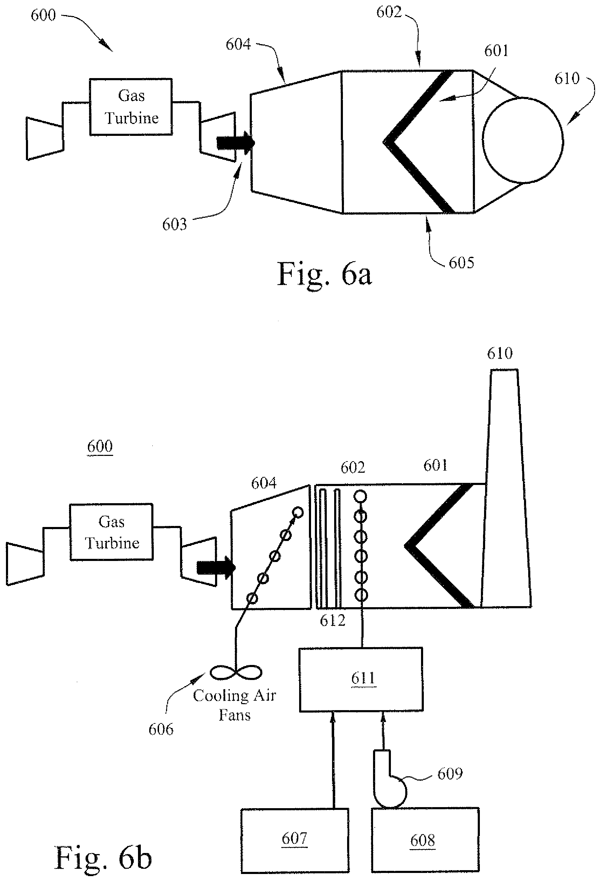

FIG. 6a is an illustration of a fifth embodiment according to the invention. FIG. 6a inverts the V-shape of FIG. 2a. In this embodiment, the catalyst wedge 601 is pointed in the direction opposite the flow 603 of exhaust gases. In this configuration, exhaust gases are split and forced outward before passing through the catalyst. The V-shape here provides the benefit of splitting the exhaust flow 603 before it passes through the catalyst, unlike the V-shape of FIG. 2a, which corrals the airflow within its wedge. Both configurations provide benefits over the conventional designs in that additional residence time and surface area are provided to the exhaust flows. FIGS. 6a and 6b illustrate views of gas turbine system 600. Flow 603 may optionally pass through additional catalysts such as CO catalyst 612, which may be of conventional design arranged according to any of the nonlimiting embodiments described herein.

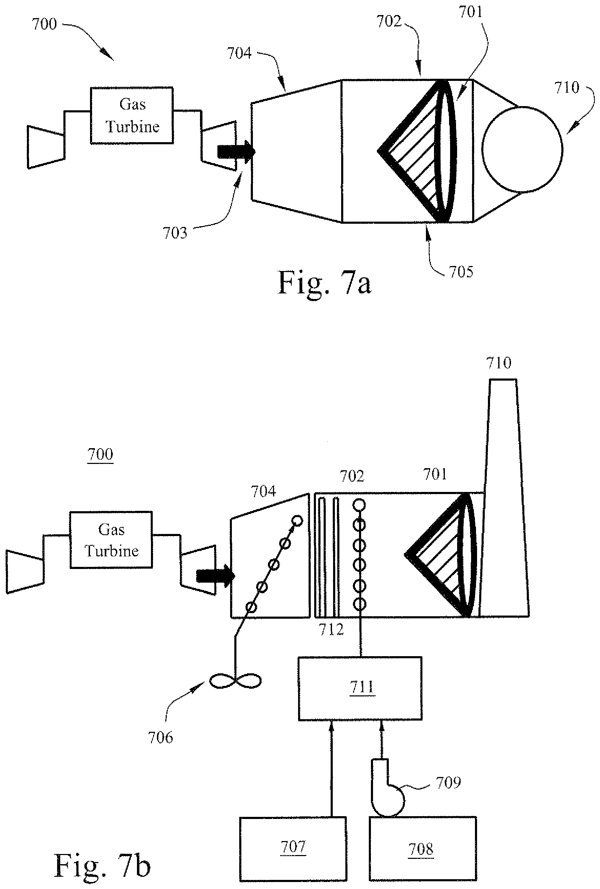

FIG. 7a is an illustration of a sixth embodiment according to the invention. FIG. 7a inverts the cone shape of FIG. 3a. In this embodiment, the catalyst cone 701 is pointed in the direction opposite the flow 703 of exhaust gases. In this configuration, exhaust gases are split and forced outward before passing through the catalyst. The cone shape here provides the benefit of splitting the exhaust flow before it passes through the catalyst, unlike the cone shape of FIG. 3a, which corrals the airflow within its cone. Both configurations provide benefits over the conventional designs in that additional time and surface area are provided to the exhaust flows. FIGS. 7a and 7b illustrate views of gas turbine system 700. Flow 703 may optionally pass through additional catalysts such as CO catalyst 712, which may be of conventional design arranged according to any of the nonlimiting embodiments described herein.

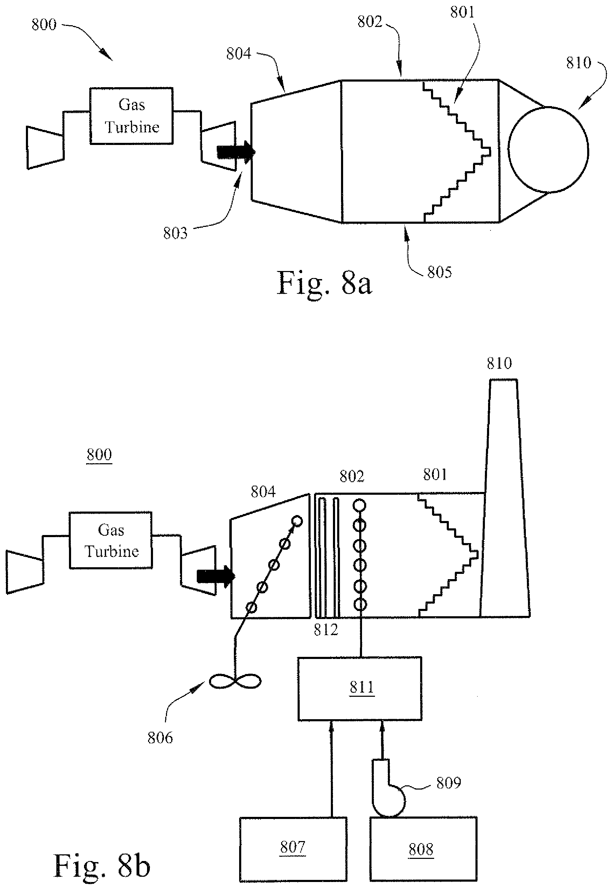

FIG. 8a is an illustration of a seventh embodiment according to the invention. FIG. 8a provides a catalyst 801 with a stair step configuration added to the V-shape of FIGS. 2a and 6a. Utilizing a stair step as illustrated in FIG. 5a applied to the V shape of FIGS. 2a and 6a further provides additional surface area to assist in passing more exhaust gas through the catalyst 801 as well as reducing the effects of the pressure drop. FIGS. 8a and 8b illustrate views of gas turbine system 800. Flow 803 may optionally pass through additional catalysts such as CO catalyst 812, which may be of conventional design arranged according to any of the nonlimiting embodiments described herein.

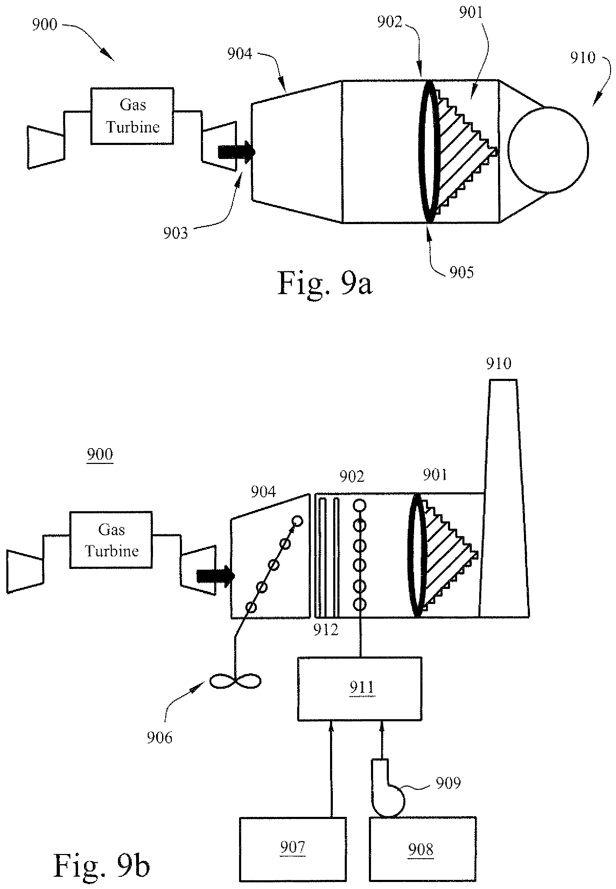

FIG. 9a is an illustration of an eighth embodiment according to the invention. FIG. 9a provides a catalyst 901 with a stair step configuration added to the cone shape of FIGS. 3a and 7a. Utilizing a stair step as illustrated in FIG. 5a applied to the cone shape of FIGS. 3a and 7a further provides additional surface area to assist in passing more exhaust gas through the catalyst 901 as well as reducing the effects of the pressure drop. FIGS. 9a and 9b illustrate views of gas turbine system 900. Flow 903 may optionally pass through additional catalysts such as CO catalyst 912, which may be of conventional design arranged according to any of the nonlimiting embodiments described herein.

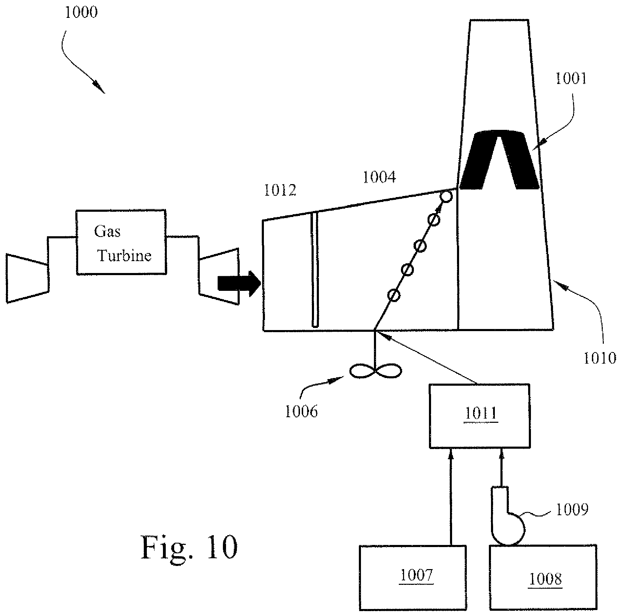

FIG. 10 is an illustration of a ninth embodiment according to the invention. FIG. 10 illustrates the alternative configuration for the catalyst 1001 provided in the stacks 1010 rather than the exhaust duct 1002. Any of the alternative structures for the catalyst discussed and illustrated in association with FIGS. 2a-9a may be configured and arranged to be placed in the stacks 1010 or the exhaust duct 1002. Moving the catalyst further downstream, i.e., into the stack and past the exhaust duct, provides the gas more time to cool and slow down without interference. The additional time helps to reduce the pressure loss associated with conventional designs.

The delaying of the interaction of the flue and/or exhaust gas with the catalyst structure provides the flue and/or exhaust gas with a slower velocity when it passes through the catalyst, whereby the catalyst may remove NOₓ or another pollutant. The slower velocity is accomplished using any of a number of catalyst structure designs which are not available conventionally, whereby the front surface of the catalyst is intentionally misaligned with the flow direction of the exhaust and/or flue gases. The alternative configuration and arrangement effectively creates a much larger cross sectional area for pollutant, i.e., NOₓ, reduction.

The additional surface area serves to better catalyze pollutants in the exhaust gas, therefore being a more efficient and more effective system for removing pollutants, while also significantly reducing the pressure drop associated with conventional systems. Experimentally, the alternative designs were found to reduce the pressure drop by more than 70%. Correspondingly, according to gas turbine models, the alternative arrangements described herein also can lead to an increased power output of the associated gas turbine by at least 5MW (megawatts). Further, by minimizing the need to increase the size of the exhaust duct, costs were reduced by up to 20%.

For the purposes of this application, "flue gas" and "exhaust gas" may be used interchangeably, meaning that the invention has beneficial effects when discussing catalyst structures played in the path of the flow of exhaust and/or flue gases associated with a gas turbine power plant.

It is to be understood that the invention is not to be limited to the disclosed embodiment, but on the contrary, is intended to cover various modifications and equivalent arrangements included within the scope of the appended claims.

## Claims

1. An exhaust section for a gas turbine power plant, comprising:
an exhaust duct (102) in fluid communication with exhaust gas (103,503) from a gas turbine engine (100), wherein the exhaust gas flows through the exhaust duct (102) along a flow direction (103, 503);
a catalyst-supporting platform (101) spanning a flow passage in the exhaust duct (102) such that the exhaust gas passes through the platform (101), wherein the platform (101) includes apertures having catalyst coated surfaces and the catalyst supporting platform (101) has a front face which, at least in part, is not perpendicular to the flow direction (103,503) the exhaust section **characterised in that** the catalyst supporting platform includes steps (501) and wherein each step includes a riser in a plane substantially perpendicular to the flow direction and a tread in a plane substantially parallel to the flow direction (103,503).

2. The exhaust section for a gas turbine power plant (300) according to claim 1, wherein the catalyst supporting platform (301) is substantially a conical shape with a cone axis parallel to the flow direction (303).

3. The exhaust section for a gas turbine power plant (300) according to claim 2, wherein the conical shape (301) has a V-cross section which converges in the flow direction (303).

4. The exhaust section for a gas turbine power plant (100) according to claim 1, 2 or 3, wherein a plurality of the apertures have axes oriented in a range of ten to ninety degrees with respect to the flow direction (103).

5. The exhaust section for a gas turbine power plant (400) according to any of claims 1 to 4, wherein the catalyst supporting platform (401) is oriented in a plane at an angle with respect to the flow direction (403) in a range of ten to ninety degrees.

6. The exhaust section for a gas turbine power plant (100) according to any preceding claim, wherein the catalyst coated surfaces include an oxidation or reduction agent coating.

## Patentansprüche

1. Abluftabschnitt für ein Gasturbinenkraftwerk, umfassend:
einen Abluftkanal (102) in Fluidkommunikation mit Abluftgas (103, 503) von einem Gasturbinentriebwerk (100), wobei das Abluftgas entlang einer Strömungsrichtung (103, 503) durch den Abluftkanal (102) strömt,
eine katalysatortragende Plattform (101), die einen Strömungsdurchgang in dem Abluftkanal (102) derart überspannt, dass das Abluftgas durch die Plattform (101) läuft, wobei die Plattform (101) Mündungen beinhaltet, die katalysatorbeschichtete Oberflächen aufweisen, und die katalysatortragende Plattform (101) eine Vorderseite aufweist, die mindestens teilweise nicht senkrecht zu der Strömungsrichtung (103, 503) ist, wobei der Abluftabschnitt **dadurch gekennzeichnet ist, dass** die katalysatortragende Plattform Stufen (501) beinhaltet, und wobei jede Stufe eine Steigung in einer Ebene, die im Wesentlichen senkrecht zu der Strömungsrichtung ist, und einen Auftritt in einer Ebene, die im Wesentlichen parallel zu der Strömungsrichtung (103, 503) ist, beinhaltet.

2. Abluftabschnitt für ein Gasturbinenkraftwerk (300) nach Anspruch 1, wobei die katalysatortragende Plattform (301) im Wesentlichen eine konische Form mit einer Kegelachse parallel zu der Strömungsrichtung (303) ist.

3. Abluftabschnitt für ein Gasturbinenkraftwerk (300) nach Anspruch 2, wobei die konische Form (301) einen V-Querschnitt aufweist, der in der Strömungsrichtung (303) zusammenläuft.

4. Abluftabschnitt für ein Gasturbinenkraftwerk (100) nach Anspruch 1, 2 oder 3, wobei eine Mehrzahl der Mündungen Achsen aufweisen, die in einem Bereich von zehn bis neunzig Grad in Bezug auf die Strömungsrichtung (103) orientiert sind.

5. Abluftabschnitt für ein Gasturbinenkraftwerk (400) nach einem der Ansprüche 1 bis 4, wobei die katalysatortragende Plattform (401) in einer Ebene mit einem Winkel in Bezug auf die Strömungsrichtung (403) in einem Bereich von zehn bis neunzig Grad orientiert ist.

6. Abluftabschnitt für ein Gasturbinenkraftwerk (100) nach einem der vorstehenden Ansprüche, wobei die katalysatorbeschichteten Oberflächen eine Oxidations- oder Reduktionsmittelbeschichtung beinhalten.

## Revendications

1. Section d'échappement pour une centrale à turbine à gaz, comprenant :
un conduit d'échappement (102) en communication de fluide avec un gaz d'échappement (103, 503) provenant d'un moteur à turbine à gaz (100), dans lequel le gaz d'échappement s'écoule au travers du conduit d'échappement (102) le long d'un sens d'écoulement (103, 503) ;
une plateforme de soutien de catalyseur (101) traversant un passage d'écoulement dans le conduit d'échappement (102) de sorte que le gaz d'échappement passe à travers la plateforme (101), dans laquelle la plateforme (101) comprend des ouvertures ayant des surfaces revêtues de catalyseur et la plateforme de soutien de catalyseur (101) a une face avant qui, au moins en partie, n'est pas perpendiculaire au sens d'écoulement (103, 503) la section d'échappement étant **caractérisée en ce que** la plateforme de soutien de catalyseur comprend des marches (501) et dans laquelle chaque marche comprend une contremarche dans un plan sensiblement perpendiculaire au sens d'écoulement et un giron dans un plan sensiblement parallèle au sens d'écoulement (103, 503).

2. Section d'échappement pour une centrale à turbine à gaz (300) selon la revendication 1, dans laquelle la plateforme de soutien de catalyseur (301) est sensiblement une forme conique avec un axe conique parallèle au sens d'écoulement (303).

3. Section d'échappement pour une centrale à turbine à gaz (300) selon la revendication 2, dans laquelle la forme conique (301) a une section transversale en V qui converge dans le sens d'écoulement (303).

4. Section d'échappement pour une centrale à turbine à gaz (100) selon la revendication 1, 2 ou 3, dans laquelle une pluralité d'ouvertures ont des axes orientés dans une plage de dix à quatre-vingt-dix degrés par rapport au sens d'écoulement (103).

5. Section d'échappement pour une centrale à turbine à gaz (400) selon l'une quelconque des revendications 1 à 4, dans laquelle la plateforme de soutien de catalyseur (401) est orientée dans un plan à un angle par rapport au sens d'écoulement (403) dans une plage de dix à quatre-vingt-dix degrés.

6. Section d'échappement pour une centrale à turbine à gaz (100) selon l'une quelconque des revendications précédentes, dans laquelle les surfaces revêtues de catalyseur comprennent un revêtement à agent d'oxydation ou de réduction.
